Europäisches Patentamt

European Patent Office

Office européen des brevets

(11) Publication number: **0 039 624**
A1

## (12) EUROPEAN PATENT APPLICATION

(21) Application number: **81302021.1**

(51) Int. Cl.³: **H 04 M 11/04**

(22) Date of filing: **07.05.81**

(30) Priority: **07.05.80 US 147689**

(43) Date of publication of application: **11.11.81**
**Bulletin 81/45**

(84) Designated Contracting States: **BE DE GB IT NL**

(71) Applicant: **HONEYWELL INC., Honeywell Plaza,
Minneapolis, Minnesota (US)**

(72) Inventor: **Buskirk, Allan F.V., 9531 Andover Circle,
Fountain Valley California 92708 (US)**
Inventor: **Moskovitch, Gad, 9542 Guinida Lane, Anaheim
California 92804 (US)**

(74) Representative: **Harman, Michael Godfrey et al,
Honeywell Control Systems Ltd. Charles Square,
Bracknell Berkshire RG12 1EB (GB)**

(54) **Data communication system.**

(57) A central station alarm reporting system has a central station 7 connected to a plurality of remote premises units 9 via a telephone network 8. In central station 7, a microprocessor 10 controls a plurality of selector control unit interfaces 11; each of these sends information by frequency shift keying (FSK). Each remote station includes a channel service unit 16, which receives such FSK information. The SCU 16 also encodes 4-bit words to be sent back to dual tone multifrequency (DTMF) transmission, as a high tone having 1 of 4 predetermined high frequencies and a low tone having 1 of 4 predetermined low frequencies. Thus each 4-bit word is sent with all 4 bits passing simultaneously. Each SCU 16 includes a decoder for decoding the DTMF transmissions back into 4-bit words.

# DATA COMMUNICATION SYSTEM

This invention relates to the transmission of information, particularly in a system for reporting alarms at remote premises to a central station.

Central station systems have arisen to meet the needs of those commercial and residential establishments which are not large enought to provide their own alarm systems and security forces. Two forms of alarm reporting in central station applications were developed to service these remotely located customers. In the first or direct wire service, the alarm sensors for detecting such occurrences as unauthorised door openings, breakage of windows, and fires, are connected to a pair of telephone lines, dedicated specifically to that customer and extending to the central station. In the second or McCulloh service, a plurality of customers share a common telephone line with sensors located at strategic points in each of the customers' premises and alarms occurring at any of the customers premises are reported in a coded format to identify the specific customer at which the alarm arose.

In both types of systems, an operator located at the central station monitors the signals received from the remote customer premises. If the current level on the dedicated wires in the direct wire system changes by greater than a specified percentage, an alarm for that remote premises is given. In the McCulloh type system, if a code is received identifying a specific customer premises, again that remote customer premises is in alarm. In either case, the operator contacts the proper authorities to eliminate the condition which gave rise to the alarm.

These prior art type systems involved not only a complex communication network between the remote premises and the central station but also required complex equipment at the central station to process the information coming both over a multitude of inputs and in either the direct dedicated wire or the McCulloh formats. Bell Systems are now providing a communication network which eliminates the duality of providing both direct dedicated wire and McCulloh systems and reduces the complexity of the communication system. The present invention finds application in the use of Bell Systems equipment in a central station application for reporting alarms at remote premises to a central station and for providing certain control functions at the remote premises by messages generated at the central station.

Accordingly the present invention provides a data communication system comprising a central station and at least one remote premises unit connected together over a communication channel through which a word comprising a plurality of bits of information may be sent in parallel in a single transmission, characterized in that the remote station includes means for encoding a word to be transmitted in the form of a pair of tone frequencies, the first selected from a set of predetermined high frequencies and the second from a set of predetermined low frequencies, and the central station includes decoding means which decode a received pair of tone frequencies into the word which was encoded at the remote station.

An alarm reporting system embodying the invention will now be described, by way of example, with reference to the accompanying drawings, in which:

Figure 1 is a general block diagram of the system;

Figure 2 shows the information format for information sent by the central station to the remote premises;

Figure 3 shows the format for information sent by the remote premises to the central station;

Figure 4 is a block diagram of a remote premises unit, and,

Figure 5 is a block diagram of the SCU interface located at the central station. Figure 5 is divided into two sections, Figures 5A and 5B, and it should be noted particularly that, for convenience, the single input/output port in the SCU interface is shown twice, once in Figure 5A and once in Figure 5B.

## DETAILED DESCRIPTION

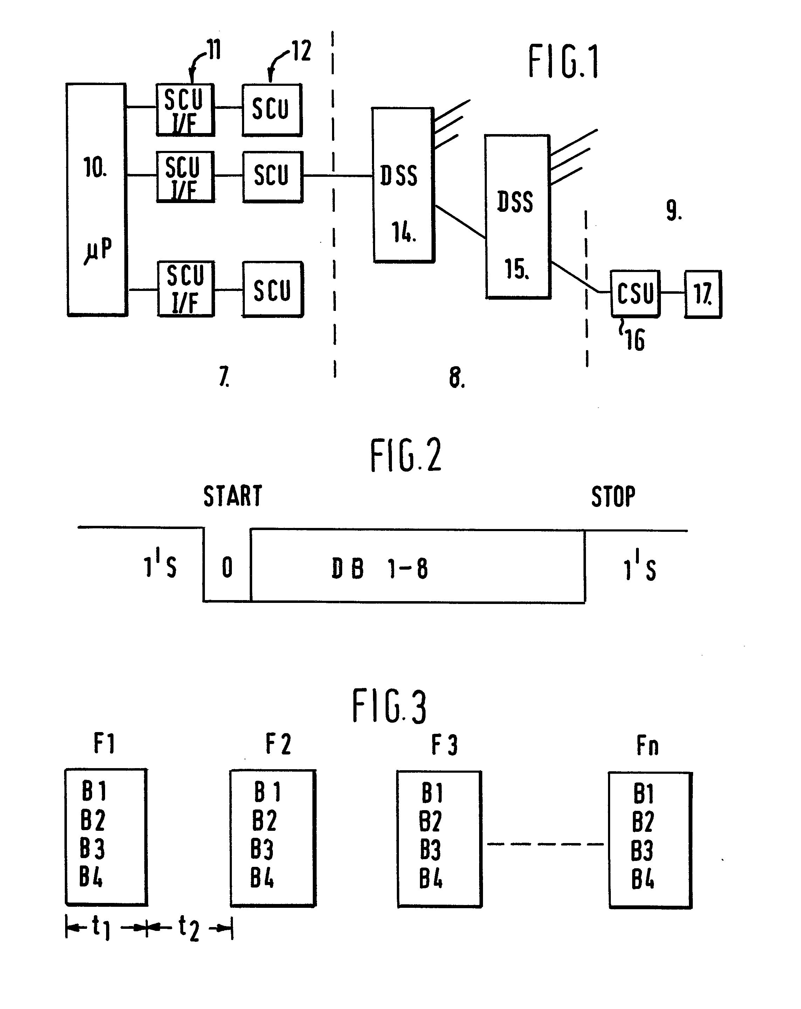

In Figure 1, a central station 7 includes processor 10 including typical displays such as CRTs and printers, memory, and a microprocessor. The microprocessor bus is connected to up to eight selector control unit (SCU) interfaces 11 each of which is connected to a respective selector control unit (SCU) 12. The SCU's 12 are connected by a four wire line 13 to a primary data station selector (DSS) 14 in a switching station 8 to the corresponding SCU 12. The primary DSS 14 may be connected directly to the remote premises or to a secondary data station selector (DSS) 15 which in turn is connected to the remote premises 9. Secondary DSS 15 may in turn be connected through a third DSS to the remote premises. The two wire outputs from the secondary DSS 15 are connected each to a remote premises one of which is shown in Figure 1 and comprises channel service unit (CSU) 16 connected between secondary DSS 15 and burglar alarm unit 17.

SCU 12, line 13, DSS 14 and DSS 15, and CSU 16 are all supplied by the Bell System as its Dataphone Select-A-Station Service.

In operation of the basic system shown in Figure 1, processor 10 first addresses the specific SCU interface circuit 11 through which it wishes to communicate. Using primary stepping signals, processor 10 controls the stepping of primary data station selector 14 through the remote premises units connected to its two wire outputs, pausing at each one for allowing the transmission of a polling signal from processor 10 to the remote unit and for the transmission of the remote unit message (e.g. alarm or status information) back to the central station. When the stepping of primary DSS 14 arrives at a secondary DSS 15, secondary stepping signals are supplied from processor 10 for stepping the secondary DSS through each of the remote premises to which it is connected, pausing at each one as before.

The central station uses a frequency shift keying data format (FSK). The FSK data is transmitted serially as shown in Figure 2. The transmission is initiated when a plurality of marks (ones) are supplied to the line to act as a carrier. A start bit START in the form of a space or zero is next transmitted, followed by eight data bits DB1-8 and a stop bit STOP in the form of a mark or one. Thus, ten bits are transmitted for each eight bit character sent. The eight bit data byte is sent with the least significant bit first. Because the transmission is frequency shift keying, a first frequency is transmitted for the marks and a second frequency is transmitted for the spaces. FSK data is transmitted serially and can include messages for polling remote premises units, requiring the remote premises units to report status or address information, acknowledge status or loop alarm information and remotely arm the remote premises units.

The remote premises unit reports its status and alarm information in the format shown in Figure 3. Transmission from the premises units utilizes DTMF (dual tone multifrequency) "touch tone" dialing frequencies used in standard telephone communication. The touch tone method uses eight separate frequencies divided into four frequencies representing a high frequency group and four frequencies representing a low frequency group. One tone is selected from each group and this tone pair is transmitted containing four bits B0-B3 of parallel information. By sending a tone pair, security is built into the system since valid data requires the presence of one tone from the high group and one tone from the low group. The data is not valid if only one tone is sent, both tones are from the same group, or more than two tones are detected. In a typical system, in order to describe the status of the premises unit and to respond to various commands, more than four bits are required. Therefore, a plurality of DTMF data frames F1 to Fn are transmitted serially, one frame at a time. The first tone pair, representing four bits of data, is sent for a specified time period $t_1$. The tone pair for the next four bits is sent for the same specified time period with a relaxation time $t_2$ therebetween to allow line energy to decrease so that the DTMF receiver can detect valid tones in the next frame.

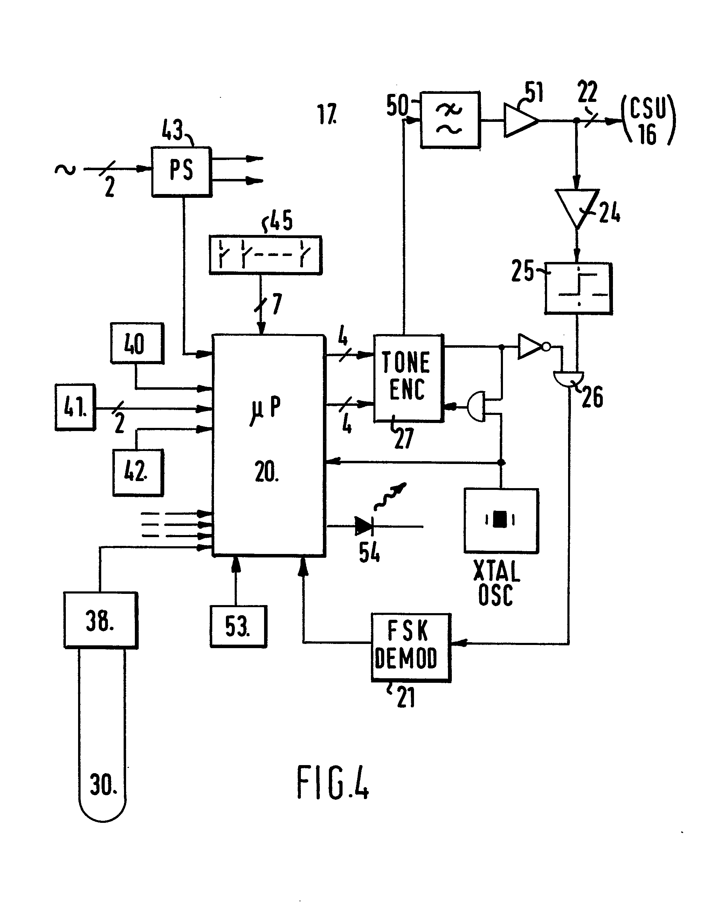

Burglar alarm unit 17 is shown in more detail in Figure 4. This unit is centered around microprocessor 20 which is connected to FSK demodulator 21 as shown. Unit 17 is connected to CSU 16 over a line pair 22. Incoming FSK data is connected through sensitivity control amplifier 24 having diode input protection (not shown) and through squaring amplifier 25 to a gate 26, which is also fed with the mute output, from a tone encoder 27, which indicates that data is being transmitted by unit 17 and will block FSK demodulator 21 through gate 26 from processing its own data.

A typical message which is received from the central station and demodulated by FSK demodulator 21 is a polling message requiring unit 17 to report the status of the four alarm loops to which microprocessor 20 may be connected. Each alarm input to the microprocessor is connected from a loop sensing circuit 38 which is fed by a loop 30 (not shown in detail) which may consist of sensing switches for sensing burglary and fire conditions. The loop sensing circuit (not shown in detail) includes a varistor for protection, incoming signal clamping diodes, threshold diodes, an amplifier, and a light emitting diode to provide a visual indication of which loop is in alarm.

There are further loop sensing circuits connected to further alarm inputs of microprocessor 20, which is also fed by a tamper detecting circuit 40, switches 41 which determine the amount of delay provided for the customer at his remote premises to exit the building after the night arm switch has been activated, a night arming switch 42 activated by the customer to inform the central station that the remote premises has been vacated and, therefore, those door closures and openings which during daylight hours would have been normal are now abnormal, and an AC loss input from a power supply and battery charging circuit 43 which provides regulated voltage for the unit 17. The microprocessor 20 is also connected to a bank of switches 45 for setting the address of the remote premises. The address as established by switches 45 is used as a double check for security purposes. That is, since this system is in the form of a stepping switch format, the microprocessor at the central station will already know the identity of the station in which it is in communication. The reply message from the remote premises containing the address, therefore, will be checked to see if there is a match. If there is no match, then security has been breached.

The output from microprocessor 20 is produced at two sets of 4-line buses feeding the tone encoder 27. One bus selects one frequency out of the low group of frequencies and the other bus selects one frequency from the high group of frequencies. The low group frequencies are 697 Hz, 770 Hz, 852 Hz, and 941 Hz and the high group frequencies are 1209 Hz, 1336 Hz, 1477 Hz, and 1633 Hz. Since there are four frequencies in the low group and four frequencies in the high group, and since each frame of four bits transmitted by the remote premises unit contains one frequency from the low group and one frequency from the high group, every combination of these four bits can be completely described. That is, with the eight frequencies provided at the remote premises unit, only four output lines at the central station are necessary for completely describing all combinations of these frequencies transmitted by the remote premises.

Microprocessor 20 determines the tone pair to make up each reporting frame from the remote premises units. The tone transmission is supplied from the tone terminal encoder 27 through low pass filter 50, line driver 51 and a protection circuit (not shown) to bus 22 which is in turn connected to CSU 16 for transmission over the two wires connected to secondary DSS 15, then through primary DSS 14 to the central station.

Circuit 53 provides a pulse to microprocessor 20 upon power up and LED 54 indicates that the remote premises are under night arming.

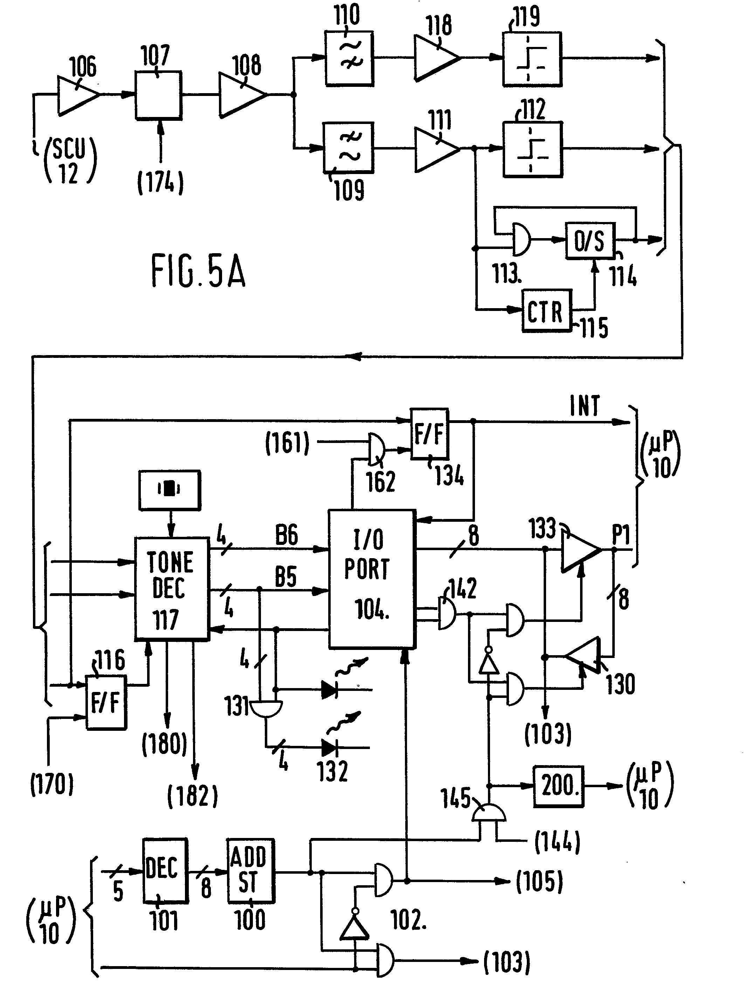

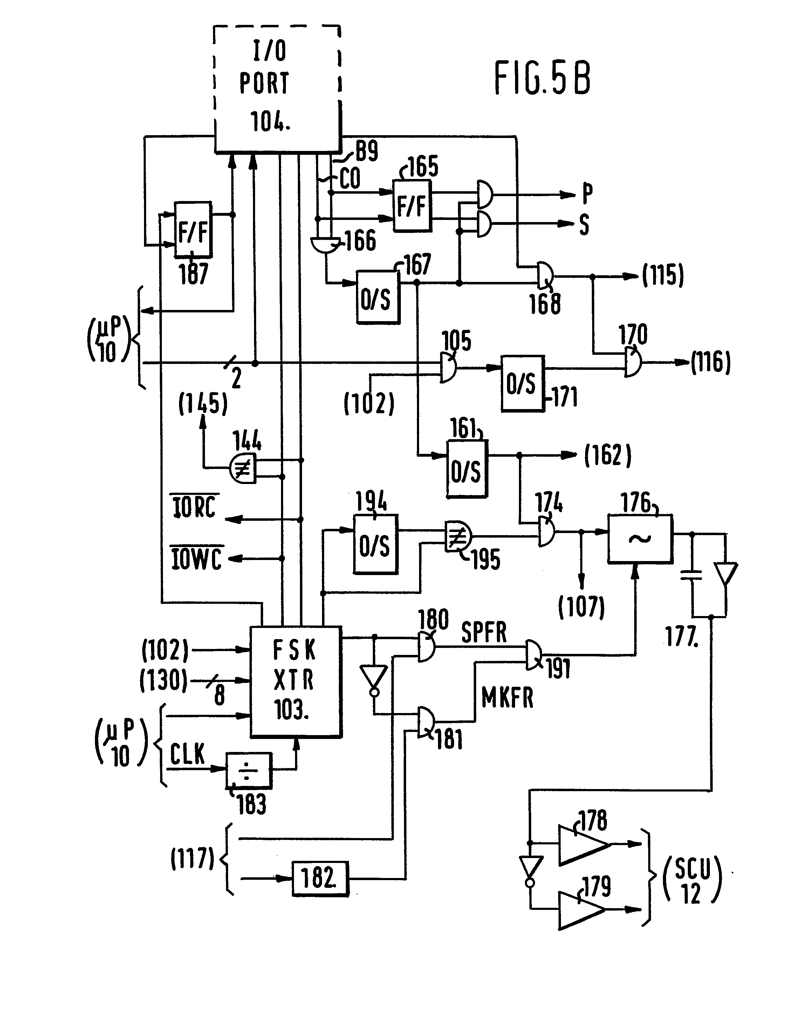

The tone transmission is connected through SCU 12 to SCU interface 11 shown in Figure 5. Each SCU has an address strap 100, comprising eight input terminals fed from corresponding output terminals of decoder 101 and an output terminal to which one of these eight input terminals is connected. Specifically, in the first SCU interface, input terminal 1 is connected to the output terminal; in the second, input terminal 2 is connected to the output terminal; and so on. The SCU interface is selected by the microprocessor by providing an address which is decoded by decoder 101 to energize one of the input terminals of address strap 100. This provides an enabling signal through a gate circuit 102. This circuit will provide an enabling signal either to FSK transmitter 103 or to input/output port 104 and gate 105.

Thus, with the SCU interface enabled, the tone transmission input is received by amplifier 106 which converts the symmetrical differential input tone transmission to a single ended output to receiver switch 107. Receiver switch 107 is normally open during transmission so that SCU interface 11 will not process its own transmission. During the receive mode, receiver switch 107 is closed to connect the tone signal through amplifier 108 to the low group bandpass filter 109, which passes the four lower frequencies, and to the high group bandpass filter 110, which passes the four higher frequencies.

The low frequency is supplied through sensitivity gain control amplifier 111 and squaring and threshold circuit 112 to tone decoder 117. At the same time, the tone transmission is connected to strobe generator 113 to generate a strobe pulse. The strobe generator is comprised of one-shot 114 and counter 115 to provide an output after a count of 32 to flip-flop 116 which in turn provides a hold signal to tone decoder 117. The high frequency is fed through sensitivity gain control amplifier 118 and threshold and squaring circuit 119 to tone decoder 117.

Tone decoder 117 has two formats of operation. In one format, it provides a 1-out-of-8 signal on an 8-line bus comprising two 4-line buses B5 and B6, each line devoted to a specific frequency. In the more predominant method of operation, it converts the low frequency tone and the high frequency tone received during the tone transmission into a four bit output word over bus B5 which completely describes the 16 combinations possible from selecting a low tone from a group of four low tones and a high tone from a group of four high tones.

These buses B5 and B6 from tone decoder 117 are connected to input/output port 104. When tone decoder 117 is operating in its predominant format of converting the tone transmission into a four bit parallel output, only bus B5 is used for connecting this information through bidirectional buffer 130-133 to microprocessor bus P1. This bus B5 also feeds a 4-gate gate circuit 131 which is enabled when decoder 117 is operating in the four bit parallel mode rather than the eight output separation of tones mode. The four bit parallel word is then displayed on a set of four LEDs 132. When tone decoder 117 is used in the eight output format, buffer 133 is also used to connect the outputs from input/output port 104 to the data bus.

At the same time that the tone transmission is being decoded by tone decoder 117 and supplied through input/output port 104 to bus drivers 133, the strobe pulse also sets latch 134 which provides an interrupt signal. When the microprocessor receives the interrupt, it can read the outputs from bus drivers 133 by raising the outputs of the input/output port 104 to gate 142, which controls bus drivers 130 and 133. Also used for this read operation is a signal from a gate 145, which is fed with the channel select input from gate 102 and from an exclusive OR gate 144.

Receive interrupt latch 134 is enabled by gate 162. One-shot 161 feeds a normally low signal to gate 162 and input/output port 104 provides a normally high signal to gate 162, so gate 162 provides a normally high signal to condition latch 134 to receive the next strobe pulse. When the strobe pulse is received, latch 134 switches to provide the interrupt signal which can be read by the microprocessor. When the microprocessor reads the interrupt, and reads the information on the output of the bidirectional bus drivers, it conditions input/output port 104 to reduce the output to gate 162 to a low state which resets interrupt latch 134 so that it is in a condition to receive the next strobe pulse for providing an interrupt output. Each time a new frame is received by SCU interface 11, another interrupt is generated to inform the microprocessor that fresh data bits are available to be read from drivers 133.

After the time period $t_2$ shown in Figure 3 has passed and no additional frame has been received by SCU interface 11, the microprocessor addresses input /output port 104 to produce a pulse either at B9 or C0 depending upon whether a primary or a secondary DSS is to be stepped. These pulses are fed to flip-flop 165 and through gate 166 to trigger one-shot 167. Flip-flop 165 determines whether a stepping pulse is to be supplied over output P or output S, depending upon whether the stepping pulse is a primary stepping pulse or a secondary stepping pulse. When one-shot 167 switches, it provides the stepping pulse which has been steered by latch 165.

The switching of one-shot 167 also provides a pulse through gates 168 and gate 170 to reset hold flip-flop 116. Hold flip-flop 116 can also be reset by one-shot 171 which receives its input from the microprocessor address lines whenever the particular SCU interface 11 has been disabled at the time that processor 10 steps to the next SCU interface. When hold latch 116 is reset, it no longer holds the output from tone decoder 117.

Also, when one-shot 167 switches, it triggers one-shot 161 which provides a PREAMBLE output to clear receive interrupt latch 134 and to provide a transmit enable pulse through gate 174 to open receiver switch 107 so that the signal transmitted by SCU interface 11 is not also received by it. The transmit enable signal from gate 174 also conditions sine wave generator 176 to begin supplying marks and spaces through wave shaper 177 and then to a corresponding SCU 12 through single ended differential line drivers 178 and 179.

The space frequency is fed to gate 180 from tone decoder 117 and the mark frequency is provided through gate 181 from a circuit 182 designed to provide the mark frequency from a signal also supplied by tone decoder 117. Gates 180 and 181 are controlled from the transmit data terminal of the asynchronous transmitter 103. Transmitter 103 receives its input data from bidirectional bus drivers 130-133. Transmitter 103 is conditioned to transmit by signals from gate circuit 102 and input/output port unit 104 and receives a clock signal from divider 183 which divides down the basic clock signal from the microprocessor. When a word to be transmitted is loaded into transmitter 103, a transmit ready signal is supplied from transmitter 103 through the transmit interrupt latch 187 to provide a transmit interrupt to the microprocessor and also to pin 16 of input/output port 104.

Transmitter 103 is then instructed to transmit by a signal from the microprocessor. The data is then supplied to gates 180 and 181. When a data bit is a space, gate 180 is enabled to pass the space frequency through gate 191 to sine wave generator 176. When a mark data bit is to be transmitted, gate 181 is enabled to pass the mark frequency through gate 191.

When the word stored in transmitter 103 has been transmitted, it supplies a transmit empty signal which is fed to one-shot 194 to supply a signal through EXCLUSIVE OR gate 195 to gate 174 to disable sine wave generator 176 and to condition receiver switch 107 to receive data from a remote station. SCU interface 11 is now in condition for receiving the frames of information from the remote premises unit as described above. Finally, acknowledgement generator 200 provides an acknowledgement signal to the microprocessor that data has been successfully transferred to input/output port 104 or to FSK transmitter 103. The input to this generator is a clock signal from the microprocessor and the output of gate 144.

CLAIMS

1.  A data communication system comprising a central
    station (7) and at least one remote premises unit (9)
    connected together over a communication channel (8)
    through which a word comprising a plurality of bits of
    information may be sent in parallel in a single transmission, characterized in that the remote station includes means (20,27) for encoding a word to be transmitted in the form of a pair of tone frequencies, the
    first selected from a set of predetermined high frequencies and the second from a set of predetermined
    low frequencies, and the central station includes decoding means (106-119,117) which decode a received
    pair of tone frequencies into the word (at B5) which
    was encoded at the remote station.

2.  A system according to Claim 1, characterized in that
    the central station includes a high pass filter (110)
    and a low pass filter (109) which separate the two
    frequencies of the pair of tone frequencies.

3.  A system according to either previous Claim, characterized in that the central station includes a strobe
    unit (113) which generates a strobe pulse upon reception of a pair of tone frequencies.

4.  A system according to Claim 3, characterized in that
    the central station further includes interrupt means
    (134) which generate an interrupt signal in response
    to the strobe signal.

5.  A system according to any previous Claim, characterized
    in that information is transmitted from the central
    station to the remote premises unit or units by frequency shift keying (FSK) (21-26,103,176-179).

6.  A system according to Claim 5, characterized in that
    the central station includes a receive switch (107) to
    which the decoding means (117) are connected and which
    is opened during FSK transmission.

7.  A system according to any previous Claim, characterized in that the or each remote premises unit includes
    microprocessor means (20) which generates the words to
    be transmitted as a plurality of bits in parallel.

8.  A system according to Claim 7 and including a plurality of remote premises units, characterized in that
    each remote premises unit includes/an address generator
    (45) connected to the microprocessing means.

9.  A system according to any previous Claim, characterized in that the or each remote premises unit includes
    alarm sensor means (30,38).

10. A system according to any previous Claim, characterized in that the words transmitted are 4-bit words and
    there are four frequencies in each set of frequencies.

11. The central station of any previous Claim.

12. The remote premises unit of any of Claims 1 to 10.

0039624

FIG.1

FIG.2

START                                                    STOP

| 1's | 0 | DB 1-8 | 1's |

FIG.3

F 1                 F 2                 F 3                         Fn

| B 1  | | B 1  | | B1  | | B1  |
| B2  | | B2  | | B2  | | B2  |
| B3  | | B3  | | B3  | | B3  |
| B4  | | B4  | | B4  | | B4  |

$\vdash t_1 \dashv \vdash t_2 \dashv$

FIG.4

FIG.5A

FIG.5B

## DOCUMENTS CONSIDERED TO BE RELEVANT

| Category | Citation of document with indication, where appropriate, of relevant passages | Relevant to claim |
|---|---|---|
| X | NEC RESEARCH & DEVELOPMENT, no. 42, July 1976, pages 50-60 Tokyo, JP. K. SHIRAI et al.: "Remote automatic meter reading system and its applications" <br><br> * Page 53, right-hand column, line 12 - page 57, left-hand column, line 1; figures 2-4; tables III and VI * | 1,2,10 |
| | IEEE TRANSACTIONS ON COMMUNICATIONS, vol. COM-27, no. 9, September 1979, pages 1366-1371 New York, U.S.A. R.A. PAVLAK et al.: "Keypac - A telephone aid for the deaf" <br><br> * Page 1366, right-hand column, line 18 - page 1369, right-hand column, line 4; figures 1,2,5,6 * | 1-3,7 |
| | GB - A - 2 016 186 (BERLINER BANK) <br><br> * Page 2, line 42 - page 4, line 45; figure 1 * | 1,9,10 |
| | DE - A - 2 822 511 (WESTINGHOUSE ELECTRIC) <br><br> * Claim 1; page 23, line 10 - page 28, line 6; figure 3 * | 1,9,10 |
| | US - A - 3 899 774 (BINNIE) <br><br> * Column 2, line 64 - column 3, line 55; figure 1 * | 1,5 |

**CLASSIFICATION OF THE APPLICATION (Int. Cl.³)**

H 04 M 11/0

**TECHNICAL FIELDS SEARCHED (Int. Cl.³)**

H 04 M 11/00
        11/04
        11/06

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| The Hague | 13-08-1981 | WANZEELE |

EPO Form 1503.1  06.78